# EUROPÄISCHE PATENTSCHRIFT

(11) **EP 0 371 203 B1**
(45) Veröffentlichungstag und Bekanntmachung des Hinweises auf die Patenterteilung: **26.01.1994**
(21) Anmeldenummer: 89114642.5
(22) Anmeldetag: 08.08.1989
(51) Int. Cl.: H02G 15/10, H02G 15/18, H02G 15/14

(54) **Druckdichte Muffe**
Pressure-proof sleeve
Manchon à l'épreuve de la pression

(30) Priorität: 29.11.1988 DE 3840139
(43) Veröffentlichungstag der Anmeldung: 06.06.1990
(73) Patentinhaber: KABEL RHEYDT Aktiengesellschaft, D-41179 Mönchengladbach (DE)
(72) Erfinder: Haag, Helmut, D-5177 Titz 1 (DE); Lindlar, Rolf, D-4052 Korschenbroich 4 (DE); Stremme, Wolfgang, Dr., NL-6291 AE Vaals (NL)
(74) Vertreter: Mende, Eberhard, Dipl.-Ing.

(56) Entgegenhaltungen:
- EP-A- 0 071 482
- EP-A- 0 247 791
- DE-C- 420 344
- DE-U- 6 605 680
- GB-A- 397 539

## Beschreibung

Die Erfindung betrifft eine druckdichte Muffe nach dem Oberbegriff des Anspruchs 1. Für die Verbindung von Kabeln werden Muffen sowohl im Bereich der Erdverlegung als auch für Seekabel verwendet. Sie müssen die Feuchtigkeit auch bei längerer Lagerung und bei Temperaturschwankungen von dem in der Muffe befindlichen Spleiß fernhalten. Von außen müssen sie geschützt sein, daß sie gegenüber den zu erwartenden Korrosionsangriffen beständig sind. Soweit Muffen ein Metallgehäuse haben, muß dieses mit dem N-Leiter des Kabels oder dem metallenen Kabelmantel oder Schirm verbunden sein. Das Muffengehäuse wird dadurch berührungssicher und dient gleichzeitig als Erder.

Bekannt ist bereits (EP-A-0 071 482) eine Muffenverbindung für Energiekabel, bei der der Übergangsbereich Muffenkörper-Kabelmantel nach außen durch einen Schrumpfschlauch abgedeckt ist. Den Übergangsbereich von Kabel und Muffenkörper bildet ein Einführungszylinder aus einem steifen Stahl- oder Aluminiumrohr.

Auch hat man bereits (DE-U-6 605 680) zur Verbindung des Metallmantels eines Kabels mit einem Muffenkörper ein Wellrohr vorgesehen, das mit seinem einen Ende mit dem Ende des Muffenkörpers und mit dem anderen Ende mit dem Metallmantel des Kabels verlötet ist. Diese Verlötung behindert die Zugänglichkeit des Muffenkörpers.

Der Erfindung liegt die Aufgabe zugrunde, eine druckdichte Muffe der eingangs genannten Art anzugeben, welche den Schutz gegen Korrosion und die Druckdichtheit nicht durch eine Vergußmasse, sondern durch Schrumpfmanschetten sicherstellt.

Der Vorteil einer solchen Muffe ist darin zu sehen, daß der Spleiß bei notwendigen Reparaturen besser zugänglich ist. Es hat sich gezeigt, daß die Vergußmasse eine schnelle Reparatur nicht zuläßt, da sie nur mit großem Zeitaufwand zu entfernen ist.

Diese Aufgabe wird bei einer Muffe der eingangs erwähnten Art nach der Erfindung durch die im Kennzeichen des Anspruchs 1 genannten Merkmale gelöst. Vorteilhafte Weiterbildungen der Erfindung sind in den Unteransprüchen gekennzeichnet.

Einsatzgebiete der Erfindung sind Erd- und Seekabel, vor allem für die Nachrichtentechnik. Vorzugsweise eignet sich die Erfindung für die Unterbringung von Lichtwellenleiterspleißen.

Die Vorteile gegenüber den bisher gebräuchlichen Muffen bestehen darin, daß die Montage der Muffe erleichtert wird, daß bei Nachrichtenkabeln, insbesondere Lichtwellenleiterkabeln, das Innere des Muffenkörpers leicht zugänglich ist und eine Reparatur sehr schnell erfolgen kann.

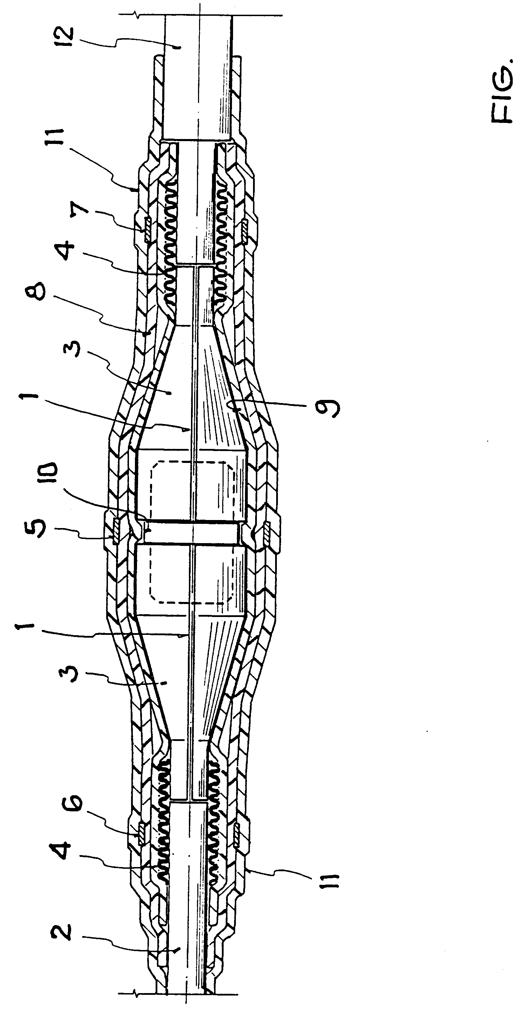

Ein Ausführungsbeispiel der Erfindung wird nachstehend anhand der Zeichnung erläutert. Die Figur zeigt einen aus zwei Halbschalen bestehenden Muffenkörper 1, welcher über einen konischen Teil 3 an jedem Ende und darübergeschobenen Metallmänteln in Form eines Wellenmantels 4 die Enden der Muffe den Kabelenden verbindet. Dabei dienen die Wellenmäntel 4 als Knickschutz. Die Kabelenden 12 sind abgemantelt und die Zugentlastungselemente 8 von beiden Seiten über die Muffe gleichmäßig auf deren Umfang verteilt. Bei der Montage wird zuvor über die abgemantelten Enden über die Wellenmäntel und den Muffenkörper eine erste Schrumpfmanschette geschoben und die Schalen der Muffe nach beendeter Montage des Spleißes verschiebefest aufeinandergepreßt. Bei Seekabeln bestehen die Zugentlastungselemente aus Armierungsdrähten, welche ca. auf einer Länge von 1,5 m freigelegt werden. Die von beiden Seiten sich über den Muffenkörper erstreckenden Zugentlastungselemente werden durch drei Schellen 5, 6 und 7 gegeneinander und bezüglich der Muffe befestigt. Die mittlere Schelle 5 drückt die Zugentlastungselemente 8 in eine Vertiefung 10, welche um die Muffe herumläuft und die Aufgabe hat, die Zugentlastungselemente gegenüber dem Muffenkörper zu verankern. Dies geschieht an dieser Stelle durch das Anziehen der Schelle 5, weil dabei die Zugentlastungselemente der Kontur der Vertiefung folgen müssen und dabei eine besonders gute kraftschlüssige Verbindung herstellen.

Seitlich verschiebefest ist die Muffe durch eine entlang der Trennlinie der Muffenschalen laufende Leiste, welche bezüglich der anliegenden Gegenschale überlappend ausgebildet ist. Diese Leiste ist in der Zeichnung nicht dargestellt. Entlang der Leiste können auf der einen Schale Warzen, auf der Gegenschale Aussparungen angeordnet sein, um die Schalen auch in axialer Richtung zu fixieren. Durch die konische Form wird aber ohnehin die axiale Verschiebemöglichkeit stark eingeschränkt. Zwischen den Schalen kann eine Dichtung aus einem gummielastischen Werkstoff angeordnet sein.

Die zugfeste und druckdichte Muffe nach der Erfindung hat unabhängig von der Form des Kabels eine hohe Zugfestigkeit, da im Muffenbereich stets ein verstärkter Armierungsquerschnitt vorhanden ist. Die Muffe besteht vorzugsweise aus Metall, ebenso wie die Ansatzstücke aus Wellrohr, welche einen flexiblen Übergang zur Muffe gewährleisten. Die Muffe ist insbesondere als Reparaturmuffe an zerstörten Kabeln einsetzbar.

Vorzugsweise kommt sie für Seekabel in Binnenseen, aber auch in Schelfmeeren zur Anwendung, da sie ohne weiteres bis 30 bar druckfest ist und mindestens 90 Prozent der Zugfestigkeit des Kabels erreicht.

## Patentansprüche

1. Druckdichte Muffe (1) zum Verbinden zweier Kabel (12) mit zwei Halbschalen, durch welche ein Hohlraum zur Spleißaufnahme ausgebildet ist, mit Übergangsstücken für die Kabelenden (12), welche auf einem inneren Kabelmantel (2) abgesetzt sind, und Schellen (5, 6, 7) zum Anklemmen der Armierungsdrähte oder Zugentlastungselemente (8), wobei über den ganzen Aufbau eine Schrumpfmanschette (11) aufgebracht ist, dadurch gekennzeichnet, daß die Übergangsstücke (4) als Wellrohre ausgebildet sind und über den konisch ausgebildetn Enden (3) der geteilten Muffe (1) und den abgemantelten Enden des Kabels (2) angeordnet sind, daß eine erste Schrumpfmanschette (9) aufgebracht ist, die sich über die Muffe (1) und die Wellrohre (4) erstreckt und gegen den inneren Kabelmantel dicht abschließt, daß die Zugentlastungselemente über den Umfang der ersten Schrumpfmanschette verteilt sind, daß jeweils an den Enden des Konus (3) und in der Mitte der Muffe (1) Schellen (5, 6, 7) vorgesehen sind, welche die Zugentlastungselemente (8) mit der Muffe (1) kraftschlüssig verbinden.

2. Druckdichte Muffe nach Anspruch 1, dadurch gekennzeichnet, daß die Muffe (1) aus Schalen besteht, welche verschiebefest aufeinanderpreßbar sind.

3. Druckdichte Muffe nach Anspruch 1 oder 2, dadurch gekennzeichnet, daß in der Mitte des Muffenkörpers und über dessen Umfang eine Vertiefung (10) angeordnet ist.

## Claims

1. Pressure-tight collar (1) connecting two cables (12) having two half shells by means of which a cavity is constructed for accommodating a splice, having transition pieces for the cable ends (12), which are placed on an inner cable sheath (2), and clamps (5, 6, 7) for clamping on the reinforcing wires or strain-relief elements (8), a shrink sleeve (11) being fitted over the entire construction, characterized in that the transition pieces (4) are constructed as corrugated tubes and are arranged over the conically constructed ends (3) of the split collar (1) and the stripped ends of the cable (2), in that a first shrink sleeve (9) is fitted which extends over the collar (1) and the corrugated tubes (4) and terminates in a sealed manner against the inner cable sheath, in that the strain-relief elements are distributed over the circumference of the first shrink sleeve, in that clamps (5, 6, 7), which connect the strain-relief elements (8) to the collar (1) in a force-fitting manner, are provided in each case at the ends of the cone (3) and in the centre of the collar (1).

2. Pressure-tight collar according to Claim 1, characterized in that the collar (1) consists of shells which can be pressed onto one another in a displacement-resistant manner.

3. Pressure-tight collar according to Claim 1 or 2, characterized in that a depression (10) is arranged in the centre of the collar body and over its circumference.

## Revendications

1. Manchon (1) étanche pour relier deux câbles (12) avec deux demi-coquilles, à travers lesquelles est ménagé un logement pour épissure avec des raccords pour les extrémités (12) de câble qui sont disposées autour de la gaine centrale (2) du câble, et des brides (5, 6, 7) pour serrer les fils d'armure ou les éléments résistant à la traction (8), dans lequel sur tout l'ensemble est mise une manchette thermorétractable (11), **caractérisé en ce que** les raccords (4) sont en forme de tubes ondulés et sont disposés au-dessus des extrémités (3) en forme de cône du manchon (1) en deux parties et des extrémités dénudées du câble (2), **en ce qu'une** première manchette thermorétractable (9) déposée s'étend au-dessus du manchon (1) et des tubes ondulés (4) et les isole vis-à-vis de la gaine intérieure du câble, **en ce que** les éléments résistant à la traction sont répartis autour de la périphérie de la première manchette thermorétractable, en ce qu'à l'extrémité de chacun des cônes (3) et au milieu du manchon (1) sont disposés des brides (5, 6, 7) qui solidarisent les éléments résistant à la traction avec le manchon (1).

2. Manchon étanche selon la revendication 1, caractérisé en ce que le manchon (1) est constitué de coquilles qui sont pressables l'une sur l'autre sans coulissement.

3. Manchon étanche, selon la revendication 1 ou 2, caractérisé en ce que dans le milieu du corps du manchon et autour de sa périphérie est disposé un évidement (10).
